# EUROPÄISCHE PATENTSCHRIFT

(11) **EP 2 035 690 B1**
(45) Veröffentlichungstag und Bekanntmachung des Hinweises auf die Patenterteilung: **23.12.2009**
(21) Anmeldenummer: 07764652.9
(22) Anmeldetag: 14.06.2007
(51) Int. Cl.: F03B 1/04

(54) **DÜSE MIT ABSPERRORGAN IN EINER PELTON- ODER TURGOTURBINE**
NOZZLE WITH A SHUT-OFF ELEMENT IN A PELTON OR TURGO TURBINE
TUYÈRE MUNIE D'UN OBTURATEUR DANS UNE TURBINE DE PELTON OU UNE TURBINE TANGENTIELLE

(30) Priorität: 03.07.2006 DE 202006010273 U
(43) Veröffentlichungstag der Anmeldung: 18.03.2009
(73) Patentinhaber: Erlach Consult JEC, 88213 Ravensburg (DE)
(72) Erfinder: ERLACH, Josef, 88213 Ravensburg (DE)
(74) Vertreter: Manitz, Finsterwald & Partner GbR
(86) Internationale Anmeldenummer: PCT/EP2007/005266
(87) Internationale Veröffentlichungsnummer: WO 2008/003391

(56) Entgegenhaltungen:
- CH-A- 124 404
- DE-C- 283 325
- DE-C- 455 344
- DE-U1-202004 019 537
- JP-A- 7 286 573
- US-A1- 2005 220 605

## Beschreibung

Die vorliegende Erfindung handelt von einer Düse mit Absperrorgan in einer Pelton- oder Turgoturbine, bei der ein Freistrahl aus einem starren, in einem Gehäuse angeordneten und sich verjüngenden Düsenkörper austritt. Derartige Absperrorgane sind beispielsweise bei mehrdüsigen Peltonturbinen notwendig, wenn je nach Last zu einer ersten Düse weitere Düsen zugeschaltet oder weggeschaltet werden sollen. Bekannt sind Düsen mit Düsennadeln, welche den Querschnitt der Düse von "geschlossen" bis "voll offen" verändern. Bei mehrdüsigen Peltonturbinen für elektrische Generatoren mit Leistungen von 10 KW bis 5000KW und generell ist es nicht unbedingt notwendig Düsen leistungsabhängig mit verstellbaren Düsennadeln zu regeln. Eine einzige geregelte Düse wäre für den Start und einen Feinabgleich ausreichend, wenn die restlichen Düsen nach Bedarf zu- oder weggeschaltet werden können. Dies gilt auch für Turgoturbinen. Turgoturbinen werden beispielsweise von der Firma WKV Wasserkraftwerk Volk AG, Am Stollen 13, D-79261 Gutach, hergestellt. Bei dieser Turbinenart treffen ein oder mehrere Freistrahlen schräg von der Seite auf ein Laufrad, das an seiner Peripherie mit einem Schaufelgitter bestückt ist.

Es besteht daher ein Bedürfnis nach Düsen mit kostengünstigen Absperrorganen für das Zu- und Wegschalten von Leistungsstufen. Wird eine Turbine mit zwei bis sechs oder mehr Leistungsstufen betrieben, so kann bei geringem Wasserangebot trotzdem mit guten Wirkungsgraden im Teillastbereich das Wasser abgefahren werden. Herkömmliche über Düsennadeln gesteuerte Düsen sind viel zu teuer, um damit nur Schalterfunktionen "ein" und "aus" zu realisieren.

In der Patentschrift JP72S6573 ist als Ersatz für eine Düse mit gesteuerter Düsennadel eine bewegliche Düse für den Freistrahl einer Peltonturbine gezeigt. Eine sich in Fließrichtung verjüngende Düse ist in der Laufradebene drehbar gelagert ausgeführt. Gezeigt ist ein zylinderförmiger Körper 12, dessen Achse senkrecht zur Laufradebene steht, der in einem zylindrischen Gehäuse gelagert ist und der quer zur Zylinderachse eine konische Düsenbohrung aufweist. Durch eine geregelte Drehung um die Zylinderachse können verschiedene Funktionen erfüllt werden:

So ist einmal durch eine Verstellung des Austrittswinkels der Düse (Vergleich Bild 1(A) mit Bild 2(A)) der Kreisdurchmesser, bei welchem der Freistrahl tangential auf das Laufrad trifft, verstellbar und damit die Leistung (siehe Bild 6(A) und 6(B)) gemäß einer variierenden, zum Beispiel saisonbedingten Fallhöhe bei optimalem Wirkungsgrad regulierbar. Im weiteren kann gemäß Bild 4 eine Strahlablenkung analog zu bereits bekannten Strahlablenkern (Bild 5) erreicht werden, wenn der zylindrische Körper über eine Sperrstellung (Bild 3(A)) hinweg soweit gedreht wird, dass die konische Düsenöffnung 14 durch eine Öffnung 17 im Gehäuse 11 freigegeben wird.

Die gezeigte Anordnung besitzt ein enorm hohes Verstelldrehmoment für eine Winkelverstellung der Düse, da der volle Staudruck mindestens auf die zur Eintrittsseite hin offene Mantelfläche des zylinderförmigen Körpers 12 einwirkt. Der zylinderförmige Körper muss mit seinem Durchmesser wesentlich größer als der Durchmesser der Zulaufleitung gewählt werden, damit für die Düsenwirkung die Durchmesserverringerung des Wasserstromes und seine Beschleunigung in den schwenkbaren Körper hinein verlegt werden kann. Es entstehen große Abmessungen und wegen der großen Abmessungen und Drücke entsprechend dickwandige und teure Bauteile.

Aufgabe der Erfindung ist es, eine kostengünstige Absperrung für einzelne Düsen von Pelton- oder Turgoturbinen zu schaffen, bei denen ein Freistrahl aus einem starren, in einem Gehäuse angeordneten Düsenmundstück mit Beschleunigungskonus austritt. Dies wird mit den Kennzeichen des unabhängigen Anspruchs 1 erreicht.

Der Vorteil dieser Anordnung liegt darin, dass das Absperrorgan im Normalbetrieb keinerlei negativen Einfluss auf die Verluste der Wasserführung hat, da der Freistrahl durch die zylindrische Durchgangsbohrung des Kugelhahns hindurch schießt ohne diesen zu berühren. Im Normalbetrieb hat eine Düse mit Düsennadel etwa 2% Strömungsverluste, was auf einen Mittelkörper mit der Düsennadel und dessen Aufhängung im Wasserstrom zurückgeht, während ein starres Düsenmundstück Strömungsverluste von etwa 1,5% aufweist. Daher werden mit der erfindungsgemäßen Lösung gegenüber der Düse mit Düsennadel etwa 0,5% Strömungsverluste eingespart, wenn man beispielsweise von einer Fallhöhe von etwa 200 m ausgeht. Außerdem können die Standardelemente eines sehr kleinen Kugelhahns verwendet werden. Lediglich der Gehäuseteil ist angepasst. Der Durchtrittsdurchmesser dieses Kugelhahns ist etwa achtmal kleiner als der Durchtrittsdurchmesser eines Kugelhahns in der Zuleitung zur Düse, der den gleichen Enddrücken ausgesetzt wäre. Im Weiteren kann die erfindungsgemäße Lösung die Erfahrungen für das dynamische Verhalten, den Verschleiß und die Dichtheit eines Kugelhahns übernehmen. Dadurch dass der Kugelhahn im Gegensatz zur Zulaufseite der Düse so klein gewählt werden kann, wird der Abstand von der Düsenmündung zu Bechern oder Schaufelgitter nur unwesentlich größer, während die Kosten für den Kugelhahn und seine Unterbringung im Turbinengehäuse wesentlich geringer ausfallen. Dies hat den Vorteil, dass der Durchtrittsdurchmesser des Kugelhahns mindestens fünfmal kleiner ausfällt als die Durchtrittsdurchmesser eines Kugelhahns in der Zuleitung. Dies bedeutet auch, dass das Flächen- und Kräfteverhältnis der Kugelhähne sich im Quadrat der Durchmesser verhält und so mindestens fünfundzwanzig mal kleiner sind.

Die abhängigen Ansprüche 2 bis 14 bilden weiterführende Verbesserungen der Erfindung. So kann der Außendurchmesser des Kugelkörpers weniger als das 2,5-fache des Durchmessers DO der Düsenöffnung betragen, um zu einem möglichst kleinen Kugelhahn und Antrieb zu kommen. Der Weg des Freistrahls vom Austritt aus der Düse zu den Bechern wird nur unwesentlich länger. Die mit ihren Achsen fluchtenden zylindrischen Gehäuse für Düsenmundstück und Kugelhahn können in hoher Präzision beispielsweise über Flanschverbindungen zentriert, zueinander abgedichtet und verbunden werden. Es ist aber ebenso möglich die Gehäuse für Kugelhahn und Düse einstückig und die wesentlichen Führungsflächen in einer Aufspannung herzustellen. In einer besonderen Ausführung des Turbinengehäuses gemäß der Patentanmeldung PCT/EP2005/012783 ist das Gehäuse des Kugelhahns und der Düse mit einem Ringkörper verbindbar, der um ein mit Doppelbechern bestücktes Laufrad herumführt und Durchgangsbohrungen in der Richtung der Freistrahlen aufweist. Zum Laufrad hin besitzt der Ringkörper satteldachförmige Anschrägungen zur Führung von Spritzwasser. Dieser Ring und die seitlich daran angrenzenden Führungsbleche führen Spritzwasser so wirkungsvoll weg, dass auch bei horizontaler Anordnung ohne Einbussen Düsenzahlen von 3 bis 6 oder mehr Düsen möglich sind, was bei gleicher Leistung zu kleineren und schneller drehenden Laufrädern und damit auch zu kleineren Generatoren führt. Die hier gezeigte Erfindung passt daher auch in das Konzept einer Kompaktturbine mit ein und mehr Düsen.

Je nach Anforderung des Kraftwerkbetreibers ist eine Vielzahl von Antriebsmöglichkeiten für die erfindungsgemäße Anwendung eines Kugelhahns möglich die von der Ausnutzung der Fallhöhe für Schließen oder Öffnen gegen Federkraft bis zu ölhydraulischen, pneumatischen oder elektrischen Antrieben reicht.

Die Firma Festo AG & Co.KG, Ruiterstrasse 82, D-73734 Esslingen führt ein Kugelhahnprogramm VAPB mit Ede1 stahlausführungen CR für Nenndrücke 63 bar und für Nenndurchmesser von 10 bis 100 mm. Als Medium ist auch Wasser vorgesehen. Das Gehäuse ist 3-teilig und verschraubt. Einzelne Gehäuseteile lassen sich als Sonderausführung mit den Gehäuseteilen eines Düsenmundstücks für Pelton- oder Turgoturbinen verbinden, um so zu der gewünschten Anordnung zu kommen. Der Aufbauflansch für den Schwenkantrieb ist nach DIN ISO 5211 für die Automatisierung mit Pneumatik- oder Elektroantrieben konzipiert. Die gleiche Firma liefert auch Schwenkantriebe für Kugelhähne.

Die Unternehmensgruppe HKS Drehantriebe GmbH mit Sitz in Bönnigheimer Ring 23, D-01904 Neukirch/Lausitz ist auf Schwenkantriebe für Armaturen wie Kugelhähne spezialisiert. Der Schwenkwinkel beträgt hier 90 +/- 1°. Die Schwenkbewegung wird über einen Kolben mir mehrgängigem Steilgewinde erreicht.

An und für sich kann ein Kugelhahn relativ schnell um 90° gedreht werden. Dies ist aber nur begrenzt erwünscht, da ein Druckstoß entgegen der Strömung vermieden werden soll. Aus diesem Grund ist es von Vorteil die Schließbewegung entsprechend einer vorgegebenen Charakteristik zu steuern. Unabhängig davon besteht das Problem, dass bei Lastabwurf keine Leistung mehr auf das Laufrad gebracht werden sollte, um ein Durchbrennen der Turbine zu verhindern. Bei kleineren Anlagen ist das Durchbrennen eher von untergeordneter Bedeutung, da Generator und Turbine über genügend Reserven bei Drehzahlerhöhung verfügen. Bei mittleren und großen Anlagen muss ein Durchbrennen verhindert werden, was üblicherweise mit separaten Strahlablenkern erreicht wird.

Eine wirksame Strahlablenkung wird bei der vorliegenden Erfindung erreicht, indem die Drehachse des Kugelhahns die in der Laufradebene liegende Achse des Düsenmundstücks kreuzt und an der Durchgangsbohrung der Kugel eine Auskehlung zur Düsenmündung hin angebracht wird, welche die Kugeloberfläche erst nach einer Drehung um einen Winkel β bei dem Freistrahl in Eingriff bringt. Hingegen lenkt die Durchgangsbohrung bereits im Winkelbereich β den Freistrahl mit dem einschwenkenden Ende der Durchgangsbohrung von der Laufradebene weg. Auf diese Weise entsteht ein Ablenken und Verwirbeln des Freistrahls und eine markante Leistungsreduktion an der Turbinenwelle, ohne dass ein großer Druckstoß entsteht. Bei einer steuerbaren Schließgeschwindigkeit des Kugelhahns kann die Charakteristik für die Schließgeschwindigkeit auf die Geometrie der Auskehlung und den Winkel β angepasst werden. Eine weitere Verbesserung der Strahlablenkung ergibt sich, wenn die Achsen von Düsenbohrung und Durchgangsbohrung im Kugelkörper fluchten, während die Drehachse des Kugelkörpers um eine Exzentrizität e zu der Achse des Düsenmundstücks versetzt ist. Der Durchmesser des Kugelkörpers muss dann etwas größer gewählt werden; gleichzeitig kann aber die Auskehlung und der Winkel β größer gewählt werden.

Es ergeben sich weitere Verbesserungen in der Belüftung des Freistrahls in der Durchgangsbohrung dadurch, dass der Innenraum der Kugel auf einen grösseren Durchmesser als der Durchmesser D1 am Eintritt in die Kugel gebracht wird. Es entsteht auf diese Weise ein weniger grosses Vakuum im Innern der Durchgangsbohrung zum Freistrahl.

Wenn zu diesem Innenraum eine Bohrung an der Kugel angebracht wird, welche in der Offen-Stellung den Innenraum mit einem Ringraum zwischen den Lager- und Dichtringen verbindet, und aussen am Gehäuse ein Rückschlagventil zum Ringraum angebracht wird, kann zusätzlich Aussenluft in den Innenraum einströmen und den Verlust an Luft ausgleichen. Bei geschlossenem Kugelhahn stehen dann der Ringraum und das von dort beaufschlagte Rückschlagventil unter dem Druck der Wassersäule.

Nachfolgend wird die Erfindung anhand von Ausführungsbeispielen beschrieben. Schematisch wird eine Düse mit einer steuerbaren Düsennadel aus dem Stand der Technik gezeigt und bei gleichem Maßstab im Vergleich dazu für gleiche Strömungsverhältnisse und Durchtrittsmengen eine starre Düse mit einem erfindungsgemäßen Absperrorgan gezeigt.

Dies ermöglicht auch einen optischen Vergleich für den Platzbedarf. Es zeigen:
- Fig. 1:: schematisch aus dem Stand der Technik eine Innenregulierte Düse mit einer steuerbaren Düsennadel für den Durchfluss,
- Fig. 2:: schematisch eine erste Anordnung für eine erfindungsgemäße starre Düse mit integriertem Kugelhahn, dessen Drehachse senkrecht zur Zeichenebene steht,
- Fig. 3:: schematisch eine weitere Anordnung für eine erfindungsgemäße starre Düse mit integriertem Kugelhahn, dessen Drehachse in der Zeichenebene liegt,
- Fig. 3a:: schematisch eine Düse mit Kugelhahn analog zu Figur 2 in offener Stellung, jedoch mit Auskehlungen in der Durchgangbohrung des Kugelkörpers,
- Fig. 3b:: schematisch die Düse mit Kugelhahn von Figur 3a jedoch nach einer Drehung des Kugelhahns um einen Winkel β in Schließrichtung,
- Fig. 3c:: schematisch eine Düse mit Kugelhahn analog zu Figur 2, jedoch mit einer etwas vergrößerten Kugel und einer Exzentrizität e zwischen der Drehachse des Kugelkörpers und den fluchtenden Achsen von Düsenmundstück und Durchgangsbohrung im Kugelkörper,
- Fig. 4:: schematisch eine starre Düse mit einem Kugelhahn mit einer Verstelleinrichtung in einem äußeren Gehäusering gemäß Figur 3,
- Fig. 5:: schematisch und verkleinert einen äußeren Gehäusering gemäß Figur 4 mit mehreren daran befestigten Düsen und dem Antrieb für einen integrierten Kugelhahn,
- Fig. 6:: schematisch und verkleinert einen Schnitt an einem äußeren Gehäusering gemäß Figur 4 und 5 mit dem Antrieb für einen integrierten Kugelbahn,
- Fig. 7:: schematisch und verkleinert einen Schnitt an einem konventionellen Turbinengehäuse mit einer daran befestigten Düse gemäß Figur 3 und dem Antrieb für einen integrierten Kugelhahn,
- Fig. 8:: schematisch eine Düse mit einem Kugelhahn, dessen Kugel in der Offen-Stellung eine bessere Luftzirkulation im Innenraum aufweist,
- Fig. 9:: schematisch eine Anordnung gemäß Figur 8, bei der zusätzlich Außenluft über ein Rückschlagventil in den Innenraum gelangt, und
- Fig. 10:: schematisch die Anordnung von Figur 9 in der Geschlossen-Stellung.

Nachfolgend sind für gleiche Elemente gleiche Hinweiszeichen verwendet.

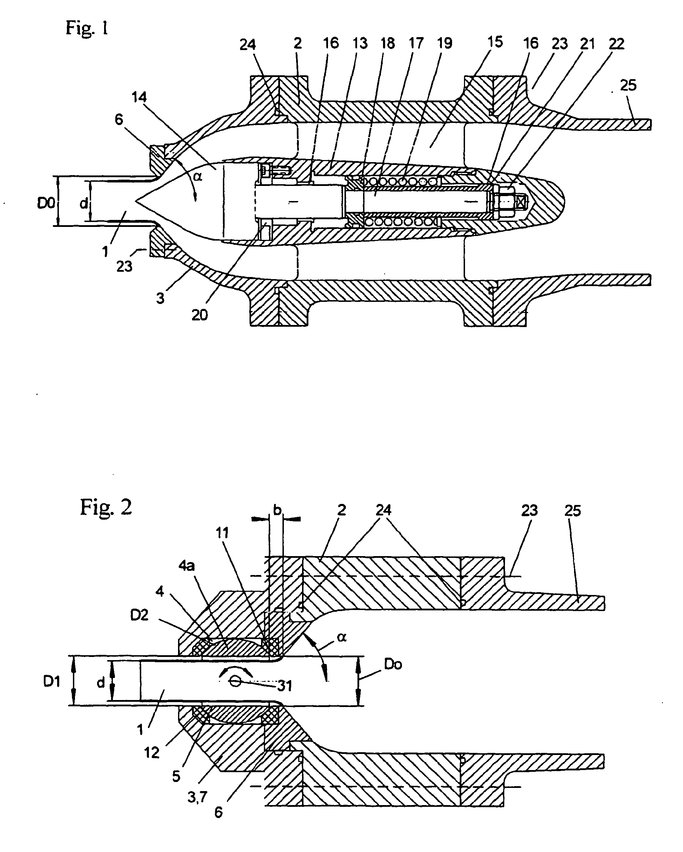

In Figur 1 ist eine herkömmliche Innenregulierte Düse mit Düsennadel 14 in einem Mittelkörper 13 axial verschiebbar gelagert und wird über eine Druckfeder 19 und einen Hydraulikkolben 18 bewegt, welcher über eine Hülse 21 und eine Mutter 22 auf der zu einer Spindel 17 verlängerten Düsennadel festgesetzt ist. Die Spindel 17 ist an Lagerstellen 16 abgestützt. Der Mittelkörper 13 und die in ihm gelagerten Teile sind über Flossen 15 mit dem eigentlichen Gehäuse 2 verbunden, wie auch ein Düsenkörper 3, welcher die konische Nadelspitze zentrisch ausgerichtet ist. Die Gehäuseteile 2 werden über Schrauben 23 zusammengehalten und über Dichtungen 24 verbunden. Hydraulikanschlüsse sind über die Flossen 15 an die Außenseite des Gehäuses 2 geführt. Das ebenfalls konische Düsemundstück 6 bildet mit der Längsachse einen halben Konuswinkel α. Das im konischen Bereich zur Längsachse hin beschleunigte Wasser bildet nach dem Austritt aus dem Düsenmundstück 6 einen Freistrahl 1, dessen kontrahierter Durchmesser d kleiner als der Durchmesser D0 der Düse ist. Die Düsennadel 14 kann bis zum Schließen in die Düse hineinbewegt werden. Die Menge des Freistrahls 1 und damit auch die abgebbare Leistung werden über die axiale Position der Düsennadel 14 geregelt.

In Figur 2 erzeugt eine starre d.h. nicht regelbare Düse mit einem halben Konuswinkel α einen Freistrahl 1, der nach dem Austritt aus der Düse in einem Abstand b auf einen Durchmesser d kontrahiert ist, der deutlich kleiner als der Durchmesser D0 der Düsenmündung ist. Unmittelbar an den Düsenmundstück 6 schließt ein Kugelhahn 4 an, dessen Kugelkörper 4a eine Durchgangsbohrung 5 mit Durchmesser D1 aufweist, welcher größer als der Durchmesser d des kontrahierten Freistrahls ist. Im geöffneten Zustand hat die vordere Stirnfläche 11 des zwangsläufig durch die Durchgangsbohrung 5 abgeplatteten Kugelkörpers 4a den Abstand b zur Düsenmündung d.h. zum Ende des konischen Bereichs mit Winkel α mit dem kleinsten noch benetzten Durchmesser D0. Der Kugelkörper 4a ist mit seiner Oberfläche in Lager- und Dichtringen 12 gefangen und in der Offen-Stellung unbelastet. Bei geschlossener Stellung liegt auf dem Lager- und Dichtring auf der Austrittsseite eine relativ kleine Schließkraft, die durch die Wassersäule und eine Kreisfläche mit dem größten Durchmesser zwischen Lager- und Dichtring 12 und des Kugelkörpers 4a bestimmt ist.

Das Düsenmundstück 6 ist aus verschleißfestem Material mit den halben Konuswinkel α. In das Düsenmundstück 6 ist der düsenseitige Lager- und Dichtring eingepresst. Zusätzlich gezeigt sind getrennte Gehäuse 2 und 7 für den Düsenkörper 3 und Kugelhahn 4, die mit dem Flansch einer Zulaufleitung 25 über Schrauben 23 gegeneinander verschraubt sind.

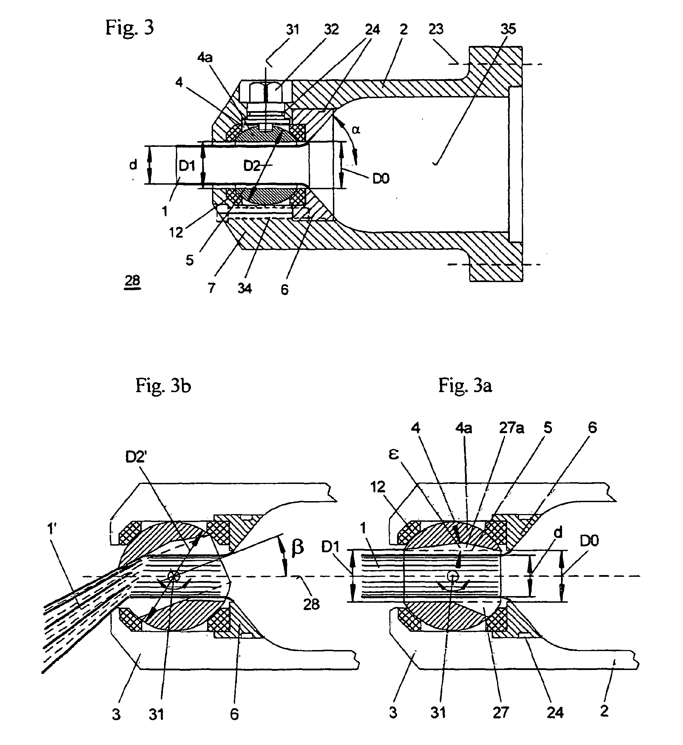

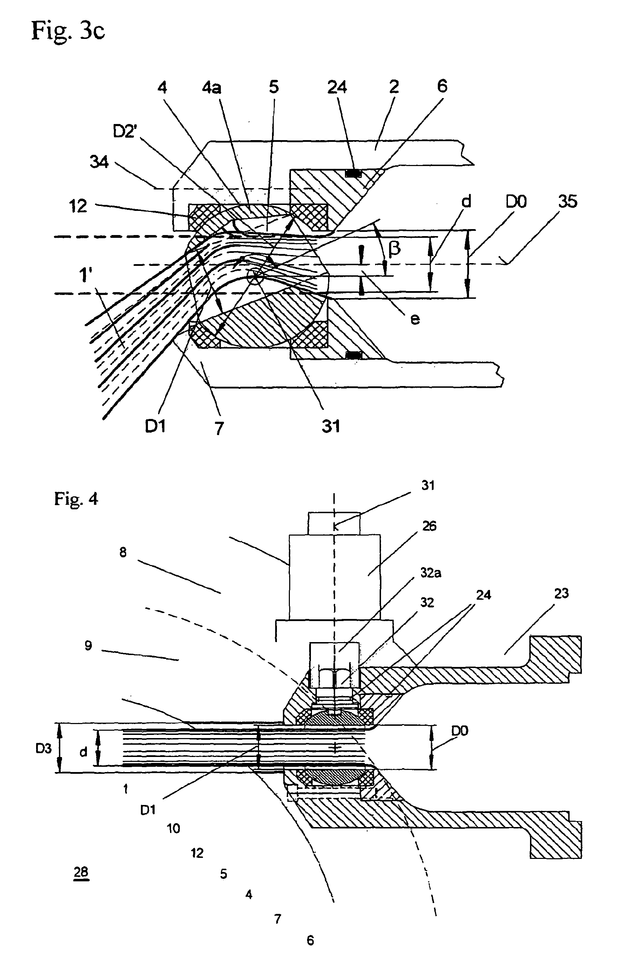

Die Düse mit Kugelhahn in Figur 3 entspricht in ihrer Funktion den Elementen von Figur 2. Die Gehäuseteile 2, 7 sind als ein Stück ausgeführt.

In das Düsenmundstück 6 ist ein düsenseitiger Halte- und Dichtring eingepresst. Dehnschrauben 34 halten das Düsenmundstück 6 unter Vorspannung an seinem Platz und sichern die Position des Kugelkörpers 4a. In der Richtung der Drehachse 31 des Kugelhahns 4 ist ein Drehzapfen 32 mit einem Vorsprung in einen Schlitz des Kugelkörpers 4a eingesteckt. Zur Montage wird zunächst der austrittseitige Lager- und Dichtring 12 von der Zulaufseite her in das Gehäuse 7 eingefahren, anschließend der Drehzapfen 32 von innen her eingefahren und der Kugelkörper 4a mit seinem Schlitz in der Richtung der Düsenachse eingefahren um den Vorsprung des Drehzapfens ähnlich einer Schneide eines Schraubendrehers zu umfassen. Nach dem Aufstecken des Düsenmundstücks 6 kann das Ganze mit Dehnschrauben 34 von der Austrittseite her gesichert werden. Dichtungen 24 dichten das Gehäuse 7 gegen das Düsenmundstück 6 und gegen den Drehzapfen 32 in der geschlossenen Stellung.

In den Figuren 3a und 3b ist ein modifizierter Kugelkörper 4a gezeigt. Die Schnittebene steht hier senkrecht zu der Drehachse 31 von Kugelkörper 4a und Drehantrieb. Bei einer Anordnung gemäß Figur 4 verläuft die Drehachse 31 parallel zur Laufradebene 28 und der Freistrahl 1 wird bis zu einer Drehung um einen Winkel abgelenkt, weil die Kugeloberfläche auf der Eintrittseite durch eine Auskehlung 27 in der Durchgangsbohrung 5 um diesen Winkel 3 zurückgenommen wurde. Da außerdem auf der Gegenseite in der Durchgangsbohrung 5 eine zusätzliche Auskehlung 27a nach Innen mit einem Winkel E vorgenommen wurde, beträgt der Ablenkwinkel, der in Figur 3b auf den Freistrahl 1' einwirkt, in etwa + c. Bei einer Anwendung nach Figur 4 liegt die Drehachse 31 des Kugelhahns in der Laufradebene und der Freistrahl 1 wird aus der Laufradebene abgelenkt. Der abgelenkte Freistrahl 1' bewegt sich seitlich von den Becherschneiden weg, sofern die Durchgangsbohrung 10 mit ihrem Durchmesser D3 im Ringkörper 8 so groß ist, dass sie die Ablenkung nicht behindert, dies kann auch durch eine örtliche Auskehlung bewerkstelligt werden. Dies führt zu einem markanten Leistungsabfall, ohne dass durch die teilweise Schließung ein wesentlicher Druckstoß in der Zuleitung entsteht. Eine solche Einrichtung, deren Schließgeschwindigkeit entsprechend einer vorgegebenen Charakteristik steuerbar ist, kann dem Durchbrennen der Turbine bei Lastabwurf entgegenwirken.

In Figur 3c ist der Kugeldurchmesser D2 etwa um 20% größer gewählt als in Figur 3. Außerdem ist die Drehachse 31 von Kugel und Schwenkantrieb um eine Exzentrizität e von der Achse 35 des Düsenmundstücks 6 versetzt. Die Achsen 35 von Düsenmundstück 6 und Durchgangsbohrung 5 im Kugelkörper 4 fluchten, das heißt die Durchgangsbohrung ist asymmetrisch zum Kugelkörper 4a und der Mittelpunkt des Kugelkörpers ist um die Exzentrizität e von der Achse 35 des Düsenmundstücks entfernt. Entsprechend dieser Exzentrizität e müssen daher auch die Lagerflächen der Lager- und Dichtringe für die Kugel korrigiert werden. Diese Maßnahme der Exzentrizität e lässt sich mit den in Figur 3a beschriebenen Auskehllungen 27, 27a kombinieren, um ein Maximum an Ablenkung zu erzielen.

Selbst wenn am Kugelhahn 4 durch die Veränderungen am Kugelkörper 4a ein generell schnellerer Verschleiß an den benetzten Teilen möglich ist, hat dies nur begrenzt negative Auswirkungen, da er nicht häufig betätigt wird und im Normalbetrieb unbelastet ist. Außerdem muss ganz allgemein so ein Düsenmundstück 6 -- und eine eventuell installierte Düsennadel -- ein bis zweimal pro Jahr wegen Sanderosion/Gletscherschliff ausgewechselt werden, was gleichzeitig auch ein Auswechseln von eventuellen Verschleißteilen an einem Kugelhahn in der gleichen Anlage ermöglicht, ohne die Verfügbarkeit der Anlage wegen des Kugelhahns einzuschränken. Der Kugeldurchmesser kann auch größer als die oben erwähnten 20% gegenüber dem Durchmesser D2 für eine Kugel mit zentrischer Durchgangsbohrung gewählt werden, wenn eine größere Exzentrizität e für eine größere Strahlablenkung erforderlich ist.

Die Düse mit Kugelhahn in Figur 4 entspricht in ihrer Funktion den Elementen von Figur 3.

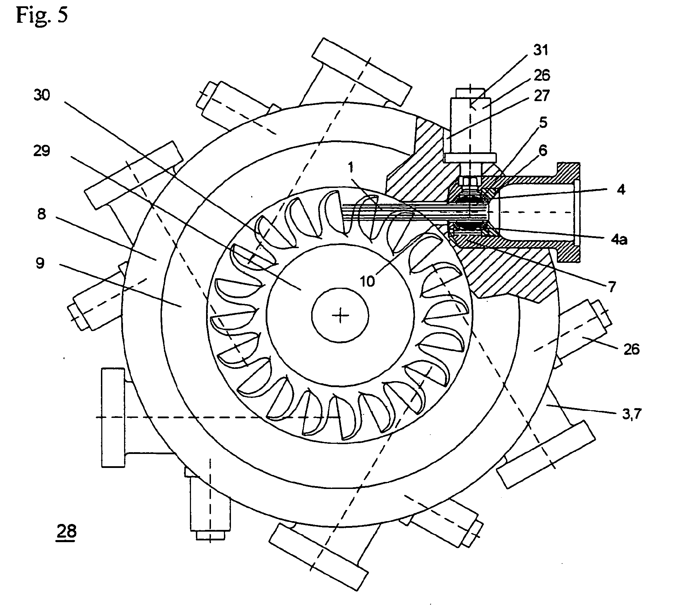

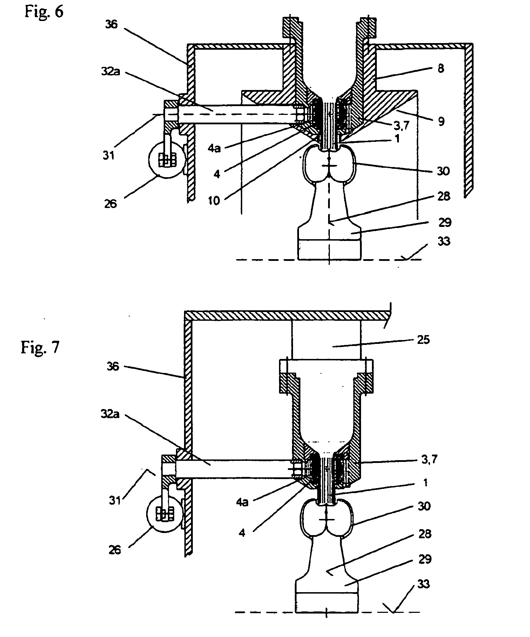

Zusätzlich gezeigt ist, wie Gehäuse 7 für Düsenmundstück 6 und Kugelhahn 4 mit einem Flansch über Schrauben 23 gegen einen Ringkörper 8 verankert ist, welcher mit seinen Bearbeitungsflächen die Ausrichtung des Freistrahls 1 sicherstellt. Der Ringkörper 8 reicht auf seiner Innenseite bis nahe an die Becher 30 eines Laufrades 29 heran (siehe Figur 5). Er besitzt auf seiner Innenseite satteldachförmige Anschrägungen 9 (siehe Figur 6), die von der der Laufradebene weg konisch abfallen um Spritzwasser aus dem Bereich der Becher nach Außen abzulenken. Für jeden Freistrahl ist im Ringkörper 8 eine Durchgangsbohrung 10 angebracht, in welcher der Freistrahl 1 gegen Spritzwasser geschützt ist, und die einen Durchmesser D3 aufweist, welcher größer als der Durchmesser des kontrahierten Freistrahls in diesem Bereich ist. Die Drehachse 31 des Kugelhahns 4 steht in diesem Fall parallel zur Laufradebene 28.

In Figur 5 sind sechs Düsenkörper 3,7 mit Düsenmundstücken 6 mit Kugelhahn 4 und Schwenkantrieb 26 in gleichen Abständen über den Umfang des Ringkörpers 8 verteilt. Die Aufstellung der Anlage d.h. für die Achse des Laufrades kann vertikal oder horizontal sein. Die Achse 31 des Kugelhahns 4 und der Schwenkantrieb 26, der den Massblättern der vorher erwähnten Firma FIKS für eine vorgesehene Größe von Kugelhahn entspricht, liegen in der Laufradebene 28. Düsenmundstück 6 und Kugelhahn 4 sind mit dem gemeinsamen Gehäuse 7 sehr nahe an die Becher 30 herangeführt. Bei dieser Anordnung dreht die Durchgangsbohrung 5 beim Schließen um die Drehachse 31 des Schwenkantriebs, wobei auf der Düsenseite die Kugeloberfläche in den Freistrahl 1 dreht und auf der Austrittseite die Wand der Durchgangsbohrung 5 in den Freistrahl dreht. Auch hier ist wie in Figur 3a eine Auskehlung 27 und/oder ein paralleler Versatz der Drehachse von Kugelkörper 4a und Schwenkantrieb 26 um eine Exzentrizität e zur Laufradebene möglich, in welcher die Achse von Düsenmundstück 6 und Durchgangsbohrung 5 verbleiben.

In Figur 6 ist ein Kugeldrehantrieb an die Stirnfläche 36 des Turbinengehäuses herausgeführt. Dazu steht in diesem Anwendungsbeispiel die Drehachse 31 von Kugelhahn 4, Drehzapfen und Drehzapfenverlängerung 32a senkrecht auf der Laufradebene 28 und ist außerhalb des Gehäuses ein Drehantrieb 26 angebracht, der aus einem Hebel und einem Linearmotor oder Hydraulikkolben besteht. Die Drehachse 31 des Kugelkörpers steht bei dieser Anwendung senkrecht zur Laufradebene 28 und die Ablenkung des Freistrahls 1' erfolgt in der Laufradebene. Die Düsenkörper 3 respektive die Gehäuse 7 mit Kugelhahn 4 sind in dem Ringkörper 8, der satteldachförmige Anschrägungen 9 aufweist, starr verbunden. Die Düse mit Kugelhahn 4 ist beispielsweise nach den Figuren 3, 3a oder mit Exzentrizität e nach Figur 3c ausgeführt. Es können mehrere Düsen zusammengeschaltet werden um in einen gestuften Betrieb mit 1, 2, 3,4, 5 oder 6 Düsen fahren zu können. Für einen sechsstufigen Betrieb würde es langen neben Düse 1 jeweils Düse 2 und 3, sowie Düsen 4, 5 und 6 zusammenzuschalten um sechs Stufen zu erreichen und Drehantriebe zu sparen. In diesem Fall sind somit nur drei Drehantriebe notwendig, wobei bei einer Notabschaltung für die Drehantriebe eine gestaffelte, blendengesteuerte (bei Hydraulikkolben) Schließzeit vorgegeben wird, um einen Druckstoß in der Wassers der Druckleitung niedrig zu halten. Die Aufstellung der Anlage d.h. für die Achse 33 des: Laufrades 29 kann vertikal oder horizontal sein.

Figur 7 entspricht Figur 6. Einzig die Befestigung der Düse 3 mit ihrem Gehäuse 7 ist, wie bei konventionellen Anlagen üblich, jeweils direkt an einem Zulaufrohr 25.

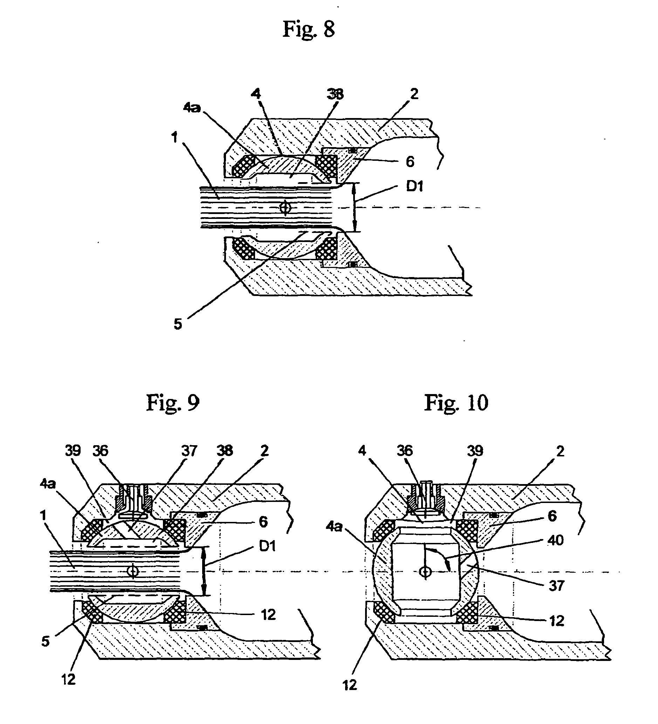

In Figur 8 ist der an die Düse 6 anschliessende Kugelhahn 4 mit einem Kugelkörper 4a versehen, dessen Durchgangsbohrung 5 hinter dem Eintrittsdurchmesser D1 aufgeweitet ist, um Platz für einen grösseren Luftraum um den Freistrahl 1 zu schaffen. Die vom Freistrahl 1 mitgerissene Luft wird durch Luft ersetzt, welche am vergrösserten Austrittsquerschnitt der Durchgangsbohrung einströmen und im Innenraum zirkulieren kann.

In den Figuren 9 und 10 wurde der Austrittsquerschnitt gleich wie am Eintritt auf dem Durchmesser D 1 belassen. In der Offen-Stellung wird die mit dem Freistrahl mitgerissene Luft über eine Bohrung 37, welche den Innenraum 38 mit dem Ringraum 39 zwischen den Lager- und Dichtringen 12 verbindet, und über ein mit dem Ringraum von Aussen verbundenes Rückschlagventil 36 ersetzt. In der Geschlossen-Stellung (Figur 10) ist der Innenraum 38 über die Bohrung 37 geflutet und die Wassersäule steht auf dem Rückschlagventil 36. Die wenigen eventuell noch verbleibenden Luftreste im Ringraum 39 werden in kürzester Zeit komprimiert und im Wasser gelöst.

**Teileliste**

| | | |
|---|---|---|
| 1 | Freistrahl | 20 Dichtring |
| 1' | abgelenkter Freistrahl | 21 Hülse |
| 2 | Gehäuse | 22 Mutter |
| 3 | Düsenkörper | 23 Schraube |
| 4 | Kugelhahn | 24 Dichtung |
| 4a | Kugelkörper | 25 Zulaufrohr |
| 5 | Durchgangsbohrung | 26 Dreh- oder |
| | | Schwenkantrieb |
| 6 | Düsenmundstück (Verschleißring) | 27 Auskehlung |
| 7 | Gehäuse | 27a Auskehlung |
| 8 | Ringkörper | 28 Laufradebene |
| 9 | Anschrägung | 29 Laufrad |
| 10 | Durchgangsbohrung | 30 Doppelbecher |
| 11 | Stirnfläche | 31 Drehachse |
| 12 | Lager- und Dichtring | 32 Drehzapfen |
| 13 | Mittelkörper | 32a Drehzapfenverlängerung |
| 14 | Düsennadel | 33 Turbinenachse |
| 15 | Flosse | 34 Dehnschraube |
| 16 | Lagerungsstelle | 35 Achse (Düsenmund- |
| | | stück 6) |
| 17 | Spindel | 36 Rückschlagventil |
| 18 | Hydraulikkolben | 37 Bohrung |
| 19 | Druckfeder | 38 Innenraum |
| | | 39 Ringraum |
| | | 40 Schwenkbereich |
| b | Abstand | D0 Düsendurchmesser |
| d | Durchmesser (kontrahierter | |
| | Freistrahl) | D 1 Durchmesser |
| | | (Durchgangsbohrung) |
| e | Exzentrizität | D2 Durchmesser (Kugel) |
| | | D2' Durchmesser (Kugel |
| | | vergrößert) |
| α | halber Düsenwinkel | D3 Durchgangsbohrung |
| | | (Ringkörper) |
| β | Winkel | |
| ε | Winkel | |

## Patentansprüche

1. Düse mit Absperrorgan in einer Pelton- oder Turgoturbine umfassend ein Gehäuse (2) und einen Düsenkörper (3), bei der ein Freistrahl (1) aus einer starren, in einem Gehäuse (2) angeordneten und sich verjüngenden Düsenkörper (3) austritt, **dadurch gekennzeichnet, dass** in Flussrichtung an das Gehäuse (2) und an den Düsenkörper (3) ein Kugelhahn (4) umfassend einen Kugelkörper (4a) mit einer zylindrischen Durchgangsbohrung (5), deren Durchmesser (D1) größer als der Freistrahldurchmesser (d) im kontrahierten Bereich ist, anschließt; wobei bei offenem Kugelhahn die Eintrittsöffnung der Durchgangsbohrung des Kugelkörpers (4a) in einem Abstand (b), der mindestens 10% des kleinsten Düsendurchmessers (D0) beträgt, dem Düsenkörper (3) vorgelagert ist und der Abstand (b) durch den Abstand einer vorderen Stirnfläche (11) der zwangsläufig durch die Durchgangsbohrung (5) abgeplatteten Kugel (4a) zu einer Düsenmündung (6) mit dem Winkel (α) mit dem kleinsten noch benetzten Durchmesser (D0) bestimmt ist, damit der Freistrahl (1) mit einem eingeschnürten Durchmesser (d), der kleiner als der Düsendurchmesser (D0) und kleiner als der Durchmesser (D1) der Durchgangsbohrung (5) ist, verlustfrei durch die Durchgangsbohrung schießt, während bei geschlossenem Kugelhahn eine kreisringförmige Kugelfläche eines Lager- und Dichtringes (12) die Wassersäule hält.

2. Düse mit Absperrorgan nach Anspruch 1, **dadurch gekennzeichnet, dass** der Außendurchmesser (D2) der Kugel (4a) weniger als 2,5-fache des Durchmessers (D0) der Düsenöffnung beträgt.

3. Düse mit Absperrorgan nach Anspruch 1 oder 2, **dadurch gekennzeichnet, dass** das Gehäuse (7) des Kugelhahns (4) mit dem Gehäuse (2) des Düsenkörpers (3) starr verbindbar ist.

4. Düse mit Absperrorgan nach Anspruch 1 oder 2, **dadurch gekennzeichnet, dass** das Gehäuse (7) des Kugelhahns (4) mit dem Gehäuse (2) des Düsenkörpers (3) ausgeführt ist.

5. Peltonturbine mit Düsen und Absperrorganen nach Anspruch 3 oder 4, **dadurch gekennzeichnet, dass** das Gehäuse (7) für Düsenmundstück (6) und Kugelhahn (4) mit einem Flansch über Schrauben (23) gegen einen für die Düsen gemeinsamen Ringkörper (8) verankert ist, welcher mit seinen Bearbeitungsflächen die Ausrichtung des Freistrahls (1) sicherstellt.

6. Peltonturbine nach Anspruch 5, **dadurch gekennzeichnet, dass** eine Drehbewegung des Kugelhahns (4) über einen Dreh- oder Schwenkantrieb (26, 32, 32a) erfolgt.

7. Peltonturbine nach Anspruch 6, **dadurch gekennzeichnet, dass** die Schließgeschwindigkeit des Dreh- oder Schwenkantriebes (26, 32, 32a) durch eine geregelte Drehung steuerbar ist.

8. Peltonturbine nach Anspruch 5 bis 7, **dadurch gekennzeichnet, dass** eine Drehachse (31) des Kugelhahns (4) senkrecht zur Laufradebene (28) steht.

9. Peltonturbine nach Anspruch 5 bis 7, **dadurch gekennzeichnet, dass** eine Drehachse (31) des Kugelhahns (4) senkrecht in der Laufradebene (28) liegt.

10. Düse mit Absperrorgan nach Anspruch 1 bis 9, **dadurch gekennzeichnet, dass** die Durchgangsbohrung (5) der Kugel (4a) eine Auskehlung (27) zur Düsenmündung aufweist, damit die mündungsseitige Kugeloberfläche erst nach einer Schließbewegung um einen Winkel (β) in den Freistrahl (1) eingreift, während die Durchgangsbohrung auf der Ausflussseite beim Durchfahren des Winkels (β) den Freistrahl (1') bereits ablenkt.

11. Düse mit Absperrorgan nach Anspruch 10, **dadurch gekennzeichnet, dass** die Durchgangsbohrung (5) mit ihrer Achse zur Achse des Freistrahls parallel versetzt ist.

12. Düse mit Absperrorgan nach einem der Ansprüche 1 bis 10, **dadurch gekennzeichnet, dass** die Achsen (35) von Düsenmundstück (6) und Durchgangsbohrung (5) fluchten, während die Drehachse (31) der Kugel (4a) um eine Exzentrizität e zu der Achse (35) des Düsenmundstücks versetzt ist.

13. Düse mit Absperrorgan nach einem der Ansprüche 1 bis 4, **dadurch gekennzeichnet, dass** die Kugel (4a) im Innern einen Innenraum (38) mit größerem Durchmesser als dem Durchmesser (D1) auf der Eintrittsseite der Durchgangsbohrung (5) aufweist, um bei geöffnetem Kugelhahn die Zirkulation von Luft zu verbessern.

## Claims

1. A nozzle with a shut-off member in a Pelton turbine or Turgo turbine comprising a housing (2) and a nozzle body (3), wherein a free jet (1) emerges from a rigid tapering nozzle body (3) arranged in a housing (2), **characterized in that** a ball valve (4) comprising a ball body (4a) and having a cylindrical passage bore (5) whose diameter (D1) is larger than the free jet diameter (d) in the contracted region adjoins the housing (2) and the nozzle body (3) in the flow direction, wherein, with an open ball valve, the inlet opening of the passage bore of the ball body (4a) is positioned in front of the nozzle body (3) at a spacing (b) which amounts to at least 10% of the smallest nozzle diameter (D0), and the spacing (b) is determined by the spacing of a front end face (11) of the ball (4a) necessarily flattened by the passage bore (5) from a nozzle mouth (6) with the angle (α) with the smallest still wetted diameter (D0), so that the free jet (1) with a constricted diameter (d) which is smaller than the nozzle diameter (D0) and smaller than the diameter (D1) of the passage bore (5) shoots without loss through the passage bore, whereas, with a closed ball valve, a circular ring-shaped ball surface of a bearing and sealing ring (12) holds the head of water.

2. A nozzle having a shut-off member in accordance with claim 1, **characterized in that** the outer diameter (D2) of the ball (4a) is less than 2.5 times the diameter (D0) of the nozzle opening.

3. A nozzle having a shut-off member in accordance with claim 1 or claim 2, **characterized in that** the housing (7) of the ball valve (4) is rigidly connectable to the housing (2) of the nozzle body (3).

4. A nozzle having a shut-off member in accordance with claim 1 or claim 2, **characterized in that** the housing (7) of the ball valve (4) is made with the housing (2) of the nozzle body (3) .

5. A Pelton turbine having nozzles and shut-off members in accordance with claim 3 or claim 4, **characterized in that** the housing (7) for the nozzle mouthpiece (6) and the ball valve (4) is anchored with a flange via screws (23) against a ring body (8) which is common to the nozzles and whose machining surfaces ensure the alignment of the free jet (1).

6. A Pelton turbine in accordance with claim 5, **characterized in that** a rotary movement of the ball valve (4) takes place via a rotary drive or pivot drive (26, 32, 32a).

7. A Pelton turbine in accordance with claim 6, **characterized in that** the closing speed of the rotary drive or pivot drive (26, 32, 32a) is controllable via a regulated rotation.

8. A Pelton turbine in accordance with any one of the claims 5 to 7, **characterized in that** a rotary axis (31) of the ball valve (4) is perpendicular to the rotor plane (28).

9. A Pelton turbine in accordance with any one of the claims 5 to 7, **characterized in that** a rotary axis (31) of the ball valve (4) is perpendicular to the rotor plane (28).

10. A nozzle having a shut-off member in accordance with any one of the claims 1 to 9, **characterized in that** the passage bore (5) of the ball (4a) has channeling (27) toward the nozzle opening so that the opening-side ball surface only engages into the free jet (1) after a closing movement by an angle (β), whereas the passage bore on the outflow side already deflects the free jet (1') when moving through the angle β.

11. A nozzle having a shut-off member in accordance with claim 10, **characterized in that** the axis of the passage bore (5) is slightly offset parallel to the axis of the free jet.

12. A nozzle having a shut-off member in accordance with any one of the claims 1 to 10, **characterized in that** the axes (35) of the nozzle mouthpiece (6) and of the passage bore (5) coincide, whereas the rotary axis (31) of the ball (4a) is offset by an eccentricity e to the axis (35) of the nozzle mouthpiece.

13. A nozzle having a shut-off member in accordance with any one of the claims 1 to 4, **characterized in that** the ball (4a) has an inner space (38) in the interior with a larger diameter than the diameter (D1 on the entry side of the passage bore (5) to improve the circulation of air with an open ball valve.

## Revendications

1. Tuyère munie d'un obturateur dans une turbine Pelton ou une turbine tangentielle comprenant un boîtier (2) et un corps de tuyère (3), dans laquelle un jet libre (1) sort d'un corps de tuyère rigide (3) qui va en se rétrécissant, agencé dans le boîtier (2), **caractérisée en ce qu'**un robinet à boisseau sphérique (4), comprenant un corps sphérique (4a) avec un perçage traversant cylindrique (5) dont le diamètre (D1) est supérieur au diamètre (d) du jet libre dans la région contractée, fait suite au boîtier (2) et au corps de tuyère (3) dans la direction d'écoulement ; dans laquelle, lorsque le robinet à boisseau sphérique est ouvert, l'ouverture d'entrée du perçage traversant du corps sphérique (4a) se trouve en amont du corps de tuyère (3) à une distance (b) qui s'élève à au moins 10 % du plus petit diamètre (D0) de la tuyère, et ladite distance (b) est déterminée par la distance d'une surface frontale antérieure (11) du corps sphérique (4a) obligatoirement aplati en raison du perçage traversant (5) vers une ouverture (6) de tuyère avec l'angle (α) avec le plus petit diamètre encore mouillé (D0), afin que le jet libre (1) soit propulsé sans perte à travers le perçage traversant avec un diamètre étranglé (d) qui est plus petit que le diamètre (D0) de la tuyère et plus petit que le diamètre (D1) du perçage traversant (5), tandis que lorsque le robinet à boisseau sphérique est fermé, une surface sphérique de forme annulaire d'une bague de montage et d'étanchéité (12) retient la colonne d'eau.

2. Tuyère munie d'un obturateur selon la revendication 1, **caractérisée en ce que** le diamètre extérieur (D2) du corps sphérique (4a) est inférieur à 2,5 fois le diamètre (D0) de l'ouverture de tuyère.

3. Tuyère munie d'un obturateur selon la revendication 1 ou 2, **caractérisée en ce que** le boîtier (7) du robinet à boisseau sphérique (4) est susceptible d'être relié rigidement au boîtier (2) du corps de tuyère (3).

4. Tuyère munie d'un obturateur selon la revendication 1 ou 2, **caractérisée en ce que** le boîtier (7) du robinet à boisseau sphérique (4) est réalisé avec le boîtier (2) du corps de tuyère (3).

5. Turbine Pelton comprenant des tuyères et des obturateurs selon la revendication 3 ou 4, **caractérisée en ce que** le boîtier (7) pour l'embouchure de tuyère (6) et le robinet à boisseau sphérique (4) est ancré contre un corps annulaire (8) commun pour les tuyères avec une bride au moyen de vis (23), ce corps annulaire assurant au moyen de ses surfaces usinées l'orientation du jet libre (1).

6. Turbine Pelton selon la revendication 5, **caractérisée en ce qu'**un mouvement de rotation du robinet à boisseau sphérique (4) a lieu via un entraînement rotatif ou pivotant (26, 32, 32a).

7. Turbine Pelton selon la revendication 6, **caractérisée en ce que** la vitesse de fermeture de l'entraînement rotatif ou pivotant (26, 32, 32a) est susceptible d'être commandée avec une rotation régulée.

8. Turbine Pelton selon la revendication 5 à 7, **caractérisée en ce qu'**un axe de rotation (31) du robinet à boisseau sphérique (4) est perpendiculaire au plan du rotor (28).

9. Turbine Pelton selon la revendication 5 à 7, **caractérisée en ce qu'**un axe de rotation (31) du robinet à boisseau sphérique (4) est perpendiculaire dans le plan du rotor (28).

10. Tuyère munie d'un obturateur selon la revendication 1 à 9, **caractérisée en ce que** le perçage traversant (5) du corps sphérique (4a) comporte un évasement (27) vers l'embouchure de tuyère, afin que la surface sphérique côté embouchure attaque le jet libre (1) uniquement après un mouvement de fermeture sur un angle (β), alors que le passage traversant du côté sortie dévie déjà le jet libre (1') lorsqu'il parcourt l'angle (β).

11. Tuyère munie d'un obturateur selon la revendication 10, **caractérisée en ce que** le perçage traversant (5) est tel que son axe est décalé parallèlement à l'axe du jet libre.

12. Tuyère munie d'un obturateur selon l'une des revendications 1 à 10, **caractérisée en ce que** les axes (35) de la pièce d'embouchure de tuyère (6) et du perçage traversant (5) sont alignés, tandis que l'axe de rotation (31) du corps sphérique (4a) est décalé à raison d'une excentricité e par rapport à l'axe (35) de la pièce d'embouchure de tuyère.

13. Tuyère munie d'un obturateur selon l'une des revendications 1 à 4, **caractérisé en ce que** le corps sphérique (4a) présente à l'intérieur une chambre intérieure (38) avec un diamètre plus grand que le diamètre (D1) du côté entrée du perçage traversant (5) afin d'améliorer la circulation de l'air lorsque le robinet à boisseau sphérique est ouvert.
